**Europäisches Patentamt**

**European Patent Office**

**Office européen des brevets**

(11) Publication number : **0 367 179 B1**

# EUROPEAN PATENT SPECIFICATION

(45) Date of publication of patent specification :
**05.04.95 Bulletin 95/14**

(51) Int. Cl.⁶ : **H05B 6/64, A47J 45/06**

(21) Application number : **89120101.4**

(22) Date of filing : **30.10.89**

(54) **Heat cooking method and microwave heat cooking apparatus.**

(30) Priority : **01.11.88 JP 276406/88**
**17.05.89 JP 123173/89**

(43) Date of publication of application :
**09.05.90 Bulletin 90/19**

(45) Publication of the grant of the patent :
**05.04.95 Bulletin 95/14**

(84) Designated Contracting States :
**DE GB**

(56) References cited :
**EP-A- 0 240 235**
**WO-A-87/01550**
**DE-A- 2 508 263**
**FR-A- 2 356 373**
**GB-A- 588 645**
**US-A- 2 961 520**
**US-A- 3 974 354**
**US-A- 4 165 855**
**US-A- 4 258 630**
**US-A- 4 644 858**
**PATENT ABSTRACTS OF JAPAN, vol. 9, no. 256, 15th October 1985; & JP-A-60 105 837**
**DE-A1-2 850 236**

(73) Proprietor : **MITSUBISHI DENKI KABUSHIKI KAISHA**
**2-3, Marunouchi 2-chome**
**Chiyoda-ku**
**Tokyo (JP)**
Proprietor : **MITSUBISHI ELECTRIC HOME APPLIANCE CO., LTD**
**1728-1, Oazao-Maeda**
**Hanazono-machi**
**Osato-gun**
**Saitama 369-12 (JP)**

(72) Inventor : **Arai, Tsutomu Mitsubishi Elec. Home App. Co., Ltd.**
**1728-1, Oazaomaeda**
**Hanazono-machi**
**Osato-gun Saitama-ken (JP)**
Inventor : **Kasai, Shingo Mitsubishi Elec. Home App. Co., Ltd.**
**1728-1, Oazaomaeda**
**Hanazono-machi**
**Osato-gun Saitama-ken (JP)**

(74) Representative : **Liesegang, Roland, Dr.-Ing. et al**
**FORRESTER & BOEHMERT**
**Franz-Joseph-Strasse 38**
**D-80801 München (DE)**

## Description

The present invention relates to a microwave heat cooking apparatus according to the first part of claim 1.

A known microwave heat cooking apparatus of this kind comprises a lower part in the form of a pot, bowl or pan located on a heating plate and surrounding at least a part of the cooking space, an upper part fitting as a cover over the lower part and an intermediate column connecting the upper and the lower part (WO 87/0 1550) to allow cooking both by microwave heating and by heat transported from the heating plate to the pot via heat conduction. From DE-A-2 850 236 a microwave cooking oven is known the inner walls of its heating chamber being coated by enamel.

A cooking method is well known wherein a cooking material is put on a frypan which is heated by fire from a portable cooking stove. This method facilitates the reversing operation of the cooking material. However, controlling the fire is not easy and cooking material is burnt too much or it takes much time until the inside of the cooking material is sufficiently heated.

It is the problem of the present invention to provide a microwave heat cooking apparatus which quickly results in a burn portion on a cooking material and allows heat to sufficiently permeate inside the cooking material.

This problem is accomplished by claim 1.

In the drawings:

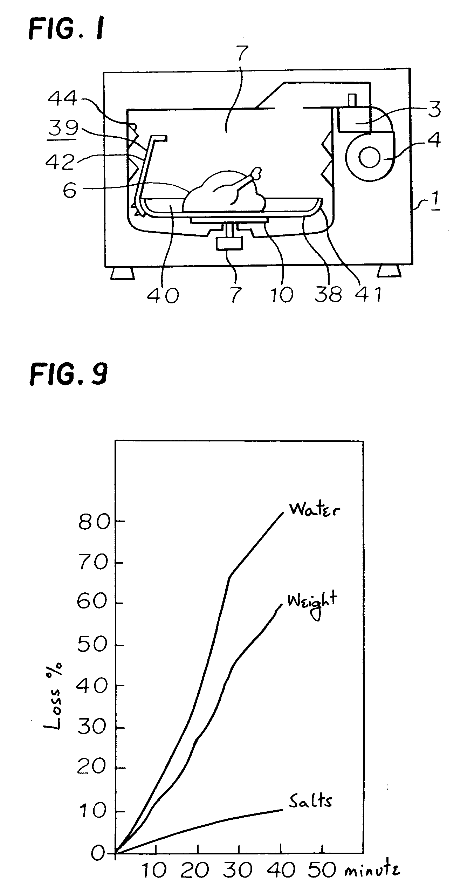

Figure 1 is a section through a microwave heat cooking apparatus main body and a frypan of the present invention;

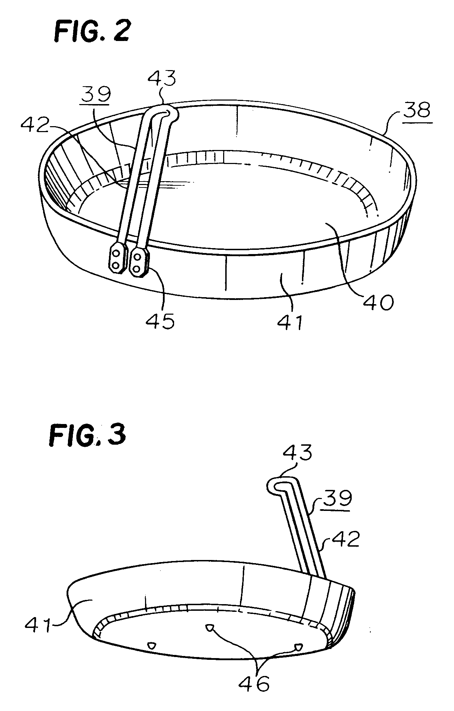

Figures 2 and 3 are respectively perspective views of the frypan;

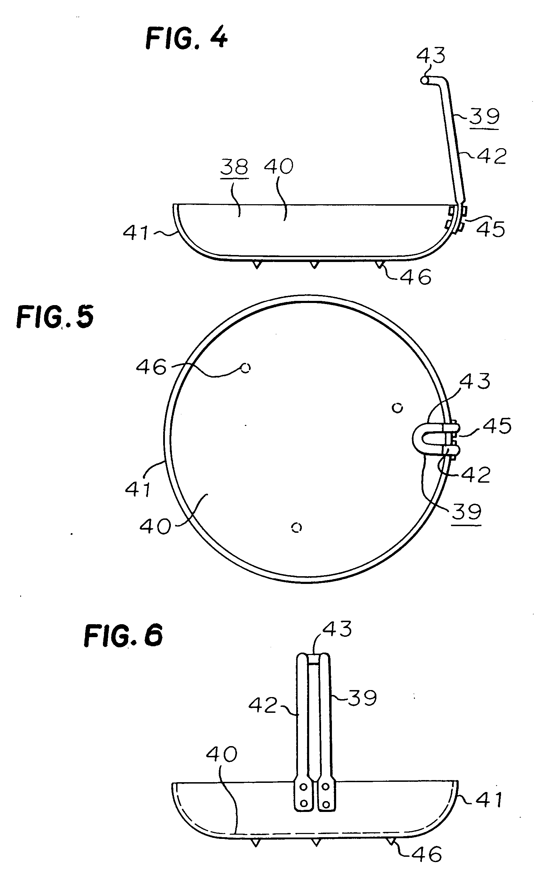

Figures 4, 5 and 6 are respectively a front view, a plane view and a side view of the frypan;

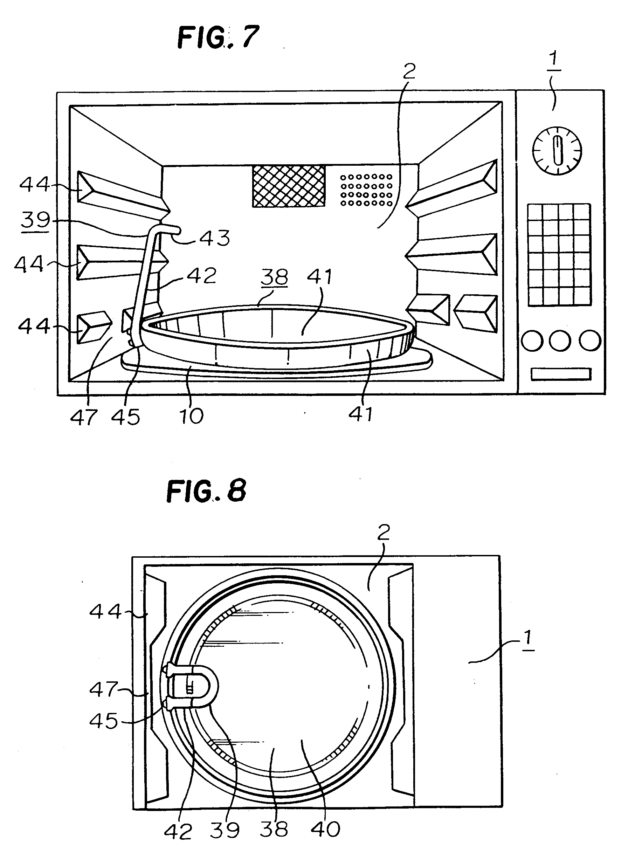

Figure 7 is a perspective view showing the heating chamber of the apparatus shown in Figure 1;

Figure 8 is a top view of the microwave heat cooking apparatus main body as shown in Figure 1 wherein the upper plate is omitted;

Figure 9 is a graph showing a relation of softness of meat to time of cooking.

In the Figures, reference numeral 1 designates a microwave heat cooking apparatus main body, numeral 2 designates a heating chamber formed in the main body, numeral 3 designates a microwave oscillating apparatus placed in the heating chamber to emit microwaves, numeral 4 designates a blower to cool the main body, numeral 10 designates a rotating plate for receiving thereon a material to be cooked 6 (hereinbelow, referred to as a cooking material) and numeral 7 a motor for turning the rotating plate. A numeral 38 designates a frypan which is rotatably supported by the rotating plate 10 which is in contact with the lower part of the frypan 38 and which is driven by motor 7. The frypan 38 is constituted by a handle 39 made of stainless steel and a body 40 made of an iron plate. The body 40 of the frypan has a diameter of 250 mm, a depth of 50 mm and a radius of curvature of the portion between the bottom and the outer peripheral portion. Four apertures are formed at the upper part of the outer peripheral portion 41 of the body 40, which are used for attaching the handle 39 by caulking with rivets. The handle 39 is formed in such a manner that a steel rod having a diameter of 8 mm is bent at the middle portion into a U-shape whose width is 28 mm, the bent portion is further bent in the direction perpendicular to the plane of the U-shaped bent portion, the further bent portion having a length of 18 mm, the free ends extending in parallel to each other are subjected to a rolling operation so that the width of the flattened portions formed by the rolling operation is 14 mm, the length is 26 mm and the thickness is 3.5 mm each. Then, two holes for rivet caulking are formed in each of the flattened portions. Thus formed four holes are aligned with the holes formed in the body portion 40 and they are connected by caulking flat-head rivets made of stainless steel. The handle 39 connected to the body portion 40 has a height of 118 mm from the upper edge of the body portion 40 so as to have a length corresponding to a multiple of a wavelength of A/4. The handle is inclined by 12° toward the body portion 40. The upper end of the handle 29 is further projected toward the center of the body portion 40 by 18 mm in parallel to the bottom surface of the body portion 40. The slanting portion of the handle 39 is referred to a grip portion 42 and the portion projecting by 18 mm is referred to as an end portion 43 and the flattened portion connected to the body portion 40 by caulking is referred to as a connecting portion 45.

Three projections 46 are formed at the outer bottom surface of the body portion 40 so that the center of the frypan 38 is located inside the triangle defined by connecting the three projections. A numeral 44 designates dish receiving shelves formed at both inner side walls of the heating chamber 2 in three rows, i.e. the upper shelves, the middle shelves and the lower shelves. The lower shelves 44 are respectively provided with cut portions 47 at the middle part. The distance between the cut portions of the opposing lower shelves is determined to be longer than the greatest diameter of the frypan 38 placed in the horizontal direction.

An electric insulation layer made of material such as enamel, fluorine resin or the like is applied to the

2

inner wall of the heating chamber 2. The height of the frypan 38 including the handle 39 is at least 2 cm lower than the distance between the ceiling of the heating chamber 2 and the upper plane of the rotating plate 10.

A method of cooking will be described. The frypan 38 is taken out from the cooking chamber 2 and oil is applied to the heating surface of the frypan 38. Then, the frypan is put on a cooking stove (which may an electric heater, a gas heater, an electromagnetic induction stove, a portable clay cooking stove or the like) and provisionally cooking is carried out by strongly heating a material to be cooked. When a burn portion is given to the reverse side (which is in contact with the frypan 38) of the cooking material 6, it is reversed by a flat spoon. Thereafter, the cooking material 6 is put into the heating chamber 2 together with the frypan 38, and regular cooking is carried out by baking the inside of the cooking material 6 by microwaves.

A burn portion is also given to the top surface of the cooking material 6 which has been reversed and is in contact with the cooking surface of the frypan 38 which has been supplied with the oil. Thus, both surfaces of the cooking material 6 are quickly burnt so as to have burn portions, and at the same time, the inside of it is sufficiently heated, whereby a time of cooking is remarkably shortened.

In an example of cooking a hamburg steak, it took about 2-3 minutes in order to give a burn portion by a portable cooking stove and it took about 3-4 minutes in order to sufficiently heat the inside of the hamburg steak in a microwave heat cooking apparatus main body 1. It is only less than 1/3 to finish the cooking in comparison with the conventional method of cooking. Practical effect is great for kitchens which are usually busy. Further, cooking time is short because the microwaves are used. As shown in Table 1, reduction in weight of meat meals such as a hamburg steak is small after cooking and the cooked meat is soft and tasty.

Table 1 (Two hamburg steaks of 150 gr were cooked)

| Method of cooking | Use of frypan of the present invention | Use of electronic oven | Use of a conventional frypan |
|---|---|---|---|
| Time of cooking | Heating by a portable cooking stove 2 min.<br><br>Heating by microwaves 4 min.<br><br><br>Total 6 min. | Preliminary heating by the oven 15 min.<br><br>Preliminary heating by the oven 12 min.<br><br>Total 27 min. | Heating by a portable cooking stove 9 min.<br><br><br><br><br>Total 9 min. |
| Weight after cooking | 140 g | 135 g | 130 g |
| Hardness by feeling test | Inside and outside: soft | Inside: normal<br>Outside: hard | Inside: normal<br>Outside: very hard<br>(Surface: very very hard) |

EP 0 367 179 B1

There is a description of "in many cases, it seems that a time of heating definitely affects softness of meat rather than heating temperature" with respect to a relation of a time of heating and softness of meat, in line 20 of page 32 in "Lecture of Science of Cooking vol. 2, Science of Basic Cooking II" published by Asakura Shoten on March 30, 1962. In page 37 of the publication, a relation of softness of meat to a time of cooking is introduced by a graph as shown in Figure 9 in a case that beef (50 g) is cooked by a gas oven (210°C) for 40 minutes.

The frypan 38 of the present invention can reduce the number of conventional frypans for domestic use because it can also be used for cooking materials only by portable cooking stoves.

Further, it is unnecessary to provide a space or a location for placing the frypan in a kitchen because it can be received in the microwave heat cooking apparatus after cooking has been finished.

In the above-mentioned embodiments, the regular cooking is carried out in the microwave heat cooking apparatus after the provisionally cooking. However, the same effect can be obtained even by conducting the regular cooking after the provisionally cooking has been carried out with the microwave heat cooking apparatus.

Since the frypan 38 is durable to a strong heat by a microwave heat cooking apparatus or a portable cooking stove, it is unnecessary to transfer a cooking material 6 to a frypan of ordinary use, whereby a time of cooking can be reduced.

In the frypan of the present invention, a grip portion 42 of the handle 39 of the frypan 38 is arranged at the upper part and inside the outer peripheral portion 41 of the body 40. Accordingly, there is no danger of a spark caused by accidentally contacting the grip portion 42 with the inner wall of the heating chamber 2 when the frypan is put in the heating chamber or it is rotated therein. Since the frypan 38 has no conspicuous projecting part, a frypan having a larger body 40 can be put in the heating chamber 2.

When the frypan is put in the heating chamber or is removed from the same, an external force (pulling force) is repeatedly applied to the grip portion 42. Therefore, the grip portion 42 tends to be deformed outwardly. However, in the present invention, the grip portion is previously arranged inside the outer peripheral portion 41 of the body portion 40. Accordingly, it is no possibility that the grip portion projects outwardly from the outer peripheral portion 41 of the body portion 40 even though there causes a deformation in the handle, and a disadvantage of hitting of the grip portion to the inner wall of the heating chamber 2 when the frypan is turned on the rotating plate can be prevented.

The frypan 38 of the present invention is easy to handle because the grip portion 42 is located toward the center of gravity. In particular, since the moment on the grip portion is greatly reduced in comparison with a conventional frypan with a handle, the touch of the frypan when the grip portion is grasped by a hand is very light. Further, since the grip portion 42 is inclined toward the center of the body portion 40, it is easily fitted to the shape of a hand and it is easy to carry the frypan. If there is slippage in hand, the end portion 43 functions as a stopper because the end portion 43 is bent. Accordingly, an accident of injury can be minimized. The bent end portion 43 can be utilized as a hanging portion or a supporting portion for the cooking material 6. When the frypan 38 is put on a portable cooking stove, heat does not come to the grip portion 42 because it is inside the outer peripheral portion 41 of the body portion 40 to thereby prevent the grip portion 42 from heating.

In the present invention, the handle 39 is made of stainless steel and has a length of λ/4 times of a wavelength which can reflect radio waves. Accordingly, the handle 39 functions as a stirrer for stirring the microwaves when the frypan 38 is rotated in the heating chamber 2 and a high frequency waves are directed to it. Therefore, uneven heating to the cooking material 6 can be prevented.

When stainless steel having poor thermal conduction property is used for the handle 39, heat can not be easily transmitted to the grip portion 42 when the frypan 38 is heated by a portable cooking stove, and the grip portion 42 is prevented from being heated, hence the frypan 38 is easily movable by a hand.

The handle 39 is made of a round rod-like metallic material without no corner portion, and therefore, it is seldom to occur a spark.

In order to avoid occurrence of a phenomenon that the frypan 38 put on a portable cooking stove becomes unstable because the central portion of the bottom surface of the frypan 38 is deformed downwardly by fire from the stove, a projections 46 higher than the central portion are formed at the circumferential portion of the outer bottom surface. Accordingly, the frypan 38 can be supported so as not to cause the direct contact of the bottom surface of the frypan 38 to the portable cooking stove, whereby an unstable state does not occur. The provision of the projections 46 has such effect that when the frypan 38 is rotated on the rotating plate 10 in the heating chamber 2, the rotation of the frypan 38 on the rotating plate 10 around the deflecting portion can be prevented. In taking the advantage that the frypan 38 is prevented from turning around the portion of deformation, the operation of the rotating plate 10 is detected by a photo sensor, a photo switch or the like installed in the microwave heat cooking apparatus main body 1. Namely, the position of the handle 39 of the frypan 38 is always same when the frypan 38 is put in the heating chamber and when the frypan 38 is removed from the heating chamber after the completion of cooking. The handle 39 of the frypan 38 is always stopped at the same position without causing the rotation of the frypan 38.

The cut portions 47 are provided at the lowest shelves 44. Accordingly, the danger of sparking between the lowest shelves 44 and the connecting portion 45 which projects from the body portion 40 of the frypan 38 can be eliminated. Further, the size of the body portion 40 of the frypan 38 is made large because the cut portions 47 are formed at the lowest shelves 44.

The inner wall of the heating chamber 2 is coated with a material having electric insulation property and difficult to be heated by microwaved, such as fluorine resin. Accordingly, it is seldom to cause a spark between the inner wall of the heating chamber 2 and the frypan 38 even though they come to mutual contact.

In the above described microwave heat cooking apparatus main body, the frypan 38 is rotated on the rotating plate 10. However, it is possible to utilize a structure that the frypan 38 is not rotated. In this case, however, the height of the frypan 38 including the handle has to be lower than the length from the ceiling of the heating chamber 2 to the bottom surface of the heating chamber 2.

In the above-mentioned embodiment, a time of cooking can be greatly reduced because a cooking material put on the frypan can be cooked together with the frypan on both the portable cooking stove and the microwave heat cooking apparatus.

Since the frypan being durable a strong heat generated from the microwave heat cooking apparatus and the portable cooking stove is used, it is unnecessary to transfer the cooking material from the above-mentioned frypan to an ordinary frypan usable in home, and accordingly, a time of cooking can be shortened.

The frypan of the present invention has a substantially circular form. Accordingly, a large surface area can be formed in the frypan in order to rotate it in the microwave heat cooking apparatus, whereby the volume of a cooking material can be increased and uneven heating of the material is avoidable.

By attaching a handle or handles, it is easy to move the frypan.

The handle can be folded toward the center of the frypan. Accordingly, an extension from the frypan can be reduced, and the surface area of the frypan can be increased. Further, since the handle is made of a material difficult to be heated by microwaves, there is substantially no temperature rise in the handle, and handling operation for the frypan can be easy.

Use of the cover made of a material which allows the microwaves to pass through is used for the frypan, whereby scattering of a cooking material is avoidable.

The outer surface of the frypan is coated with a material which is capable of absorbing the microwaves to thereby generate heat, and the energy of the microwaves can be absorbed, whereby a time of cooking is shortened.

The inner surface of the frypan is coated with a material which is difficult to be heated by the microwaves and prevents a cooking material from adhering. Excessive heating of the frypan is avoidable and occurrence of burning can be prevented.

The handle receiving chamber formed in the heating chamber receives the elongated handle.

The control means always stops the handle of the frypan at a predetermined position when cooking is finished, so that it is easy to take out the frypan.

Since a number of ribs is formed at the lower part of the frypan, there is no possibility to cause an unstable state of the frypan when it is put on a stove. Further, thermal efficiency is improved.

The guide wall formed in the heating chamber guides the outer peripheral portion of the frypan, whereby a deformation and a trace by hitting in the microwave heat cooking apparatus main body can be avoided.

The grip portion is formed above and inside the outer peripheral portion of the frypan. Accordingly, when the frypan is rotated in the microwave heat cooking apparatus main body, the grip portion does not hit the inner wall of the main body. Accordingly, there is no possibility of occurring a spark. Even though the handle is deformed during a long term use, it does not hit the inner wall of the main body.

The handle made of metal functions to stir microwaves in the main body to thereby avoid uneven heating to a cooking material.

Cutting portions are formed in at least the lowest shelves formed in the heating chamber so as not to cause a spark between the handle of the frypan and the inner wall of the microwave heat cooking apparatus main body.

The projection formed at the bottom surface of the frypan eliminates an unstable state of the frypan on the rotating plate, the unstable state being resulted from the deformation of the bottom portion of the frypan due to heat. Further, the bottom portion of the frypan can be previously raised upwardly to thereby prevent the deformation of the bottom surface in the downward direction.

By applying a surface treatment of a material having electric insulation property prevents a spark caused by the contact of the frypan to the inner wall of the microwave heat cooking apparatus main body.

**Claims**

1. A microwave heat cooking apparatus which comprises a microwave heat cooking apparatus main body (1) and a frypan (9; 38) which is shaped to be received in said main body (1) and is suitable both for being put into said apparatus and withstanding high temperatures produced by a cooking stove, **characterized** in that the frypan (9) has a handle (11; 39) which has a length of a multiple of λ/4, λ being the wavelength of the microwaves.

2. The microwave heat cooking apparatus according to claim 1, wherein the handle (11) of the frypan can be inclined in the direction of the center of the frypan.

3. The microwave heat cooking apparatus according to claim 1 or 2, wherein the handle (11) of the frypan is made of a material difficult to be easily heated by microwaves.

4. The microwave heat cooking apparatus according to one of claims 1 to 3, wherein a recess (36) is formed in a heating chamber of the microwave heat cooking apparatus main body to provide a space for receiving the handle (11).

5. The microwave heat cooking apparatus according to one of claims 1 to 4, **characterized** by a motor for turning the frypan received in the microwave heat cooking apparatus main body and a control means for controlling the motor so that the frypan is stopped when the handle of the same moves to a predetermined position.

6. The microwave heat cooking apparatus according to one of claims 1 to 5, wherein a grip portion (42) is formed in the handle (39) of the frypan (38) at the upper part of the handle and inside the outer peripheral portion (41) of the body of the frypan.

7. The microwave heat cooking apparatus according to one of the preceding claims, wherein a material capable of generating heat by absorbing microwaves is coated on the outer surface of the frypan.

8. The microwave heat cooking apparatus according to one of the preceding claims, wherein a material which is difficult to be heated by microwaves and prevents a material to be cooked from adhering thereto is coated on the inner surface of the frypan.

**Patentansprüche**

1. Mikrowellengargerät mit einem Hauptkörper (1) und einer Bratpfanne (9;38), die zur Aufnahme in dem Hauptkörper (1) gestaltet und sowohl zum Einbringen in das Gerät als auch zum Widerstehen hoher Temperaturen ausgelegt ist, welche von einem Kochherd oder Ofen erzeugt werden, dadurch **gekennzeichnet**, daß die Bratpfanne (9) einen Griff (11;39) aufweist, dessen Länge ein Vielfaches von λ/4 aufweist, wobei λ die Mikrowellenlänge ist.

2. Mikrowellengargerät nach Anspruch 1, bei dem der Griff (11) der Bratpfanne in Richtung zur Mitte der Bratpfanne geneigt sein kann.

3. Mikrowellengargerät nach Anspruch 1 oder 2, bei dem der Griff (11) der Bratpfanne aus einem Werkstoff besteht, der durch Mikrowellen nicht leicht aufgeheizt werden kann.

4. Mikrowellengargerät nach einem der Ansprüche 1 bis 3, bei dem in einer Heizkammer des Hauptkörpers eine Aussparung (36) zum Bilden eines Aufnahmeraumes für den Handgriff (11) vorgesehen ist.

5. Mikrowellengargerät nach einem der Ansprüche 1 bis 4, **gekennzeichnet** durch einen Motor zum Drehen der in dem Hauptkörper aufgenommenen Bratpfanne und eine Steuervorrichtung zum Steuern des Motors derart, daß die Bratpfanne angehalten wird, wenn ihr Handgriff sich in eine vorbestimmte Position bewegt.

6. Mikrowellengargerät nach einem der Ansprüche 1 bis 5, bei dem ein Greifabschnitt (42) im Handgriff (39) der Bratpfanne (38) an dem oberen Teil des Handgriffs und innerhalb des äußeren Umfangs (41) der Bratpfanne ausgebildet ist.

**7.** Mikrowellengargerät nach einem der vorangehenden Ansprüche, bei dem die äußere Oberfläche der Bratpfanne mit einem Werkstoff beschichtet ist, der durch Absorption von Mikrowellen Hitze erzeugen kann.

**8.** Mikrowellengargerät nach einem der vorangehenden Ansprüche, bei dem die Innenfläche der Bratpfanne mit einem Werkstoff beschichtet ist, der durch Mikrowellen nur schwer aufheizbar ist und Gargut am Anhaften hindert.

## Revendications

**1.** Appareil de cuisson à micro-ondes, qui comprend un bâti d'appareil de cuisson à micro-ondes (1) et une poêle à frire (9;38) qui présente une forme lui permettant d'être reçue dans ledit bâti (1) et qui est adaptée à la fois pour être placée dans ledit appareil et pour résister aux températures élevées produites par un four de cuisson, caractérisé en ce que la poêle à frire (9) possède une queue (11;39) qui présente une longueur égale à un multiple de $\lambda/4$, $\lambda$ étant la longueur d'onde des micro-ondes.

**2.** Appareil de cuisson à micro-ondes selon la revendication 1, dans lequel la queue (11) de la poêle à frire peut être inclinée en direction du centre de la poêle à frire.

**3.** Appareil de cuisson à micro-ondes selon la revendication 1 ou 2, dans lequel la queue (11) de la poêle à frire est faite d'un matériau qui est difficile à échauffer aisément par les micro-ondes.

**4.** Appareil de cuisson à micro-ondes selon l'une des revendications 1 à 3, dans lequel un renfoncement (36) est ménagé dans une chambre chauffante du bâti de l'appareil de cuisson à micro-ondes, pour définir un espace de réception de la queue (11).

**5.** Appareil de cuisson à micro-ondes selon l'une des revendications 1 à 4, caractérisé par un moteur pour faire tourner la poêle à frire reçue dans le bâti de l'appareil de cuisson à micro-ondes et un moyen de commande pour commander le moteur afin que la poêle à frire soit arrêtée quand sa queue se déplace jusqu'à une position prédéterminée.

**6.** Appareil de cuisson à micro-ondes selon l'une des revendications 1 à 5, dans lequel une partie de préhension (42) est formée dans la queue (39) de la poêle à frire (38) à la partie supérieure de la queue et dans les limites de la partie périphérique extérieure (41) du corps de la poêle à frire.

**7.** Appareil de cuisson à micro-ondes selon l'une des revendications précédentes, dans lequel un matériau apte à engendrer de la chaleur par absorption de micro-ondes est appliqué, en tant que revêtement, sur la surface extérieure de la poêle à frire.

**8.** Appareil de cuisson à micro-ondes selon l'une des revendications précédentes, dans lequel un matériau qui est difficile à échauffer par les micro-ondes et empêche toute adhérence d'une substance à cuire, est appliqué, en tant que revêtement, sur la surface intérieure de la poêle à frire.

## FIG. 1

## FIG. 9

## FIG. 2

## FIG. 3

# FIG. 4

# FIG.5

# FIG. 6

## FIG. 7

## FIG. 8